# EUROPEAN PATENT APPLICATION

(11) **EP 1 865 024 A1**
(43) Date of publication of application: **12.12.2007**
(21) Application number: 06730185.3
(22) Date of filing: 28.03.2006
(51) Int. Cl.: C08L 23/00, C08J 3/22, C08K 7/00

(54) **MODIFIED OLEFIN POLYMER COMPOSITION AND OLEFIN POLYMER COMPOSITION CONTAINING THE SAME**

(30) Priority: 28.03.2005 JP 2005091823
(71) Applicant: Mitsubishi Chemical Corporation, Minato-ku Tokyo 108-0014 (JP)
(72) Inventor: AKAI, Hideko, Mitsubishi Chem. Group Science & Techn., Kanagawa 2278502 (JP); SUZUKI, Toru Mitsubishi Chem. Group Science & Techn, Kanagawa 2278502 (JP)
(74) Representative: Merkle, Gebhard
(86) International application number: PCT/JP2006/306237
(87) International publication number: WO 2006/104129

(57) **Abstract**

To provide a modified olefin polymer composition comprising a phyllosilicate dispersed in a modified olefin polymer in a sufficiently delaminated state, and an olefin polymer composition comprising a phyllosilicate dispersed in an olefin polymer in a sufficiently delaminated state obtained by diluting the modified olefin polymer composition as a masterbatch diluted with an olefin polymer.

A modified olefin polymer composition obtained by mixing a phyllosilicate containing cations of an inorganic compound between layers with a modified olefin polymer having a functional group, and an olefin polymer composition comprising the modified olefin polymer composition diluted with an olefin polymer.

## Description

### TECHNICAL FIELD

The present invention relates to a modified olefin polymer composition and an olefin polymer composition using it. Particularly, it relates to a modified olefin polymer composition comprising a modified olefin polymer and a phyllosilicate dispersed therein in a delaminated state, and an olefin polymer composition comprising the modified olefin polymer composition as a masterbatch diluted with an olefin polymer.

### BACKGROUND ART

Heretofore, in order to improve mechanical properties, thermal properties, gas barrier properties, etc. of an olefin polymer, it has been attempted to incorporate a phyllosilicate. In such a case, to disperse the phyllosilicate in the olefin polymer in a delaminated state, a phyllosilicate having organic onium ions intercalated between layers has been used. However, it has been known to be difficult to disperse the phyllosilicate in the olefin polymer in a delaminated state by conventional kneading.

On the other hand, as a method to disperse the phyllosilicate in the olefin polymer in a delaminated state, a method has been proposed (for example, Patent Document 1) wherein a phyllosilicate having organic onium ions intercalated between layers and an olefin polymer are mixed in an organic solvent, followed by removal of solvent, and the mixture as a masterbatch is further melt-kneaded with an olefin polymer. Further, a method has been proposed (for example, Patent Document 2) wherein a phyllosilicate having organic onium ions intercalated between layers, and an olefin low molecular weight compound having a functional group such as a maleic anhydride group, are melt-kneaded, and the mixture as a masterbatch is further melt-kneaded with an olefin polymer. Still further, a method has been proposed (for example, Patent Document 3) wherein a phyllosilicate having an olefin interlayer-expandable polymer having a hydroxyl group or the like intercalated between layers, and an olefin polymer are melt-kneaded.

However, these conventional methods are disadvantageous in view of production cost since organic onium ions are used for delamination of the phyllosilicate. Further, according to studies by the present inventors, the phyllosilicate can not be dispersed in the olefin polymer in a sufficiently delaminated state, and the aimed object of improving physical properties by blending of a phyllosilicate can not sufficiently be achieved.
Patent Document 1: Japanese Patent No. 3393879
Patent Document 2: JP-A-10-182892
Patent Document 3: JP-A-2002-338697

### DISCLOSURE OF THE INVENTION

### OBJECT TO BE ACCOMPLISHED BY THE INVENTION

The present invention has been made based on the above-described background art regarding incorporation of a phyllosilicate in an olefin polymer. Thus, the object of the present invention is to provide an olefin polymer composition comprising an olefin polymer and a phyllosilicate dispersed in the olefin polymer in a sufficiently delaminated state.

### MEANS TO ACCOMPLISH THE OBJECT

The present inventors have conducted extensive studies to accomplish the above object and as a result, found that the above object can be accomplished by using a phyllosilicate containing a cationic inorganic compound and a modified olefin polymer having a functional group, and accomplished the present invention. Namely, the present invention resides in a modified olefin polymer composition obtained by mixing a phyllosilicate containing cations of an inorganic compound between layers and a modified olefin polymer having a functional group, and an olefin polymer composition comprising the above modified olefin polymer composition diluted with an olefin polymer.

### EFFECTS OF THE INVENTION

According to the present invention, an olefin polymer composition comprising an olefin polymer and a phyllosilicate dispersed in the olefin polymer in a delaminated state can be provided. As a result, physical properties (such as flexural modulus) of an olefin polymer composition can be improved.

### BEST MODE FOR CARRYING OUT THE INVENTION

The modified olefin polymer composition of the present invention is a composition obtained by mixing a phyllosilicate containing a cationic inorganic compound between layers and a modified olefin polymer having a functional group.

### 1. Phyllosilicate containing a cationic inorganic compound between layers

The phyllosilicate containing a cationic inorganic compound between layers is a known silicate usually comprising laminar crystals with a thickness of about 1 nm and an average aspect ratio of from about 20 to about 200 agglomerated by ionic bond to form a layer structure. The shape is preferably particulate with a volume average particle size as measured, for example, by a laser diffraction type particle size distribution measuring apparatus, of preferably at most 10 µm, more preferably at most 3 µm.

### (1) Cationic inorganic compound

The cationic inorganic compound is an inorganic compound which is cationic as a whole and is one capable of existing between anionic silicate layers forming the phyllosilicate.

The cationic inorganic compound is not particularly limited, and cations of a metal compound, cations of a silicon compound, or cations of an inorganic compound containing a metal compound or a silicon compound, may, for example, be mentioned. Among them, preferred are cations of a metal compound or cations of an inorganic compound containing a metal compound. The metal compound is preferably a metal hydroxide, a metal sulfate or the like, more preferably a metal hydroxide. The metal is preferably a metal of Group 1 to 15 of the Periodic Table, more preferably lithium, magnesium, zirconium, chromium, manganese, iron, nickel, zinc, aluminum, bismuth or the like, and particularly preferred is a metal compound containing at least two such metals.

As a specific example, brucite having part of magnesium replaced with a dissimilar metal such as iron(III), chromium(III), or aluminum(III), preferably aluminum(III), may be mentioned.

The cationic inorganic compound contained in the phyllosilicate preferably forms sheets parallel to the layers of the phyllosilicate. The size of the cationic inorganic compound is not particularly limited but is preferably such that the basal spacing of the phyllosilicate in a state where the cationic inorganic compound is present between layers of the phyllosilicate is at least 6 Å, more preferably at least 10 Å, and preferably at most 100 Å, more preferably at most 50 Å, particularly preferably at most 40 Å.

### (2) Phyllosilicate containing a cationic inorganic compound between layers

In the present invention, the phyllosilicate containing a cationic inorganic compound between layers may be either (i) a natural phyllosilicate which itself contains a cationic inorganic compound between layers or (ii) one obtained by treating a phyllosilicate containing no cationic inorganic compound between layers to introduce a cationic inorganic compound between layers of the phyllosilicate. Among them, preferred is (i) the natural phyllosilicate which itself contains a cationic inorganic compound between layers.

Particularly, preferred is non-swelling one. Non-swelling property means a difference between a peak position (2θ) based on the basal reflection in X-ray diffraction analysis of a phyllosilicate subjected to treatment of suspending it in a solvent at a concentration of 1 wt%, followed by stirring at 80°C for 5 hours, and the peak position before the above treatment, within ±0.2°, preferably within ±0.1°, more preferably within ±0.05, furthermore preferably within ±0.01°. The X-ray diffraction analysis is carried out under conditions of X-ray power (CuKα): 40 kV, 30 mA, operation range (2θ): 1.0 to 30.0°, reading width: 0.015°, and counting time: 3.0°/min.

The non-swelling property in the present invention means non-swelling property against both swelling treatments using water and toluene, as a solvent. (i) Natural phyllosilicate which itself contains a cationic inorganic compound between layers

Specifically, it may, for example, be chlorites such as clinochlore, chamosite, nimite, pennantite, sudoite, cookeite and donbassite. Among chlorites, preferred as the cationic inorganic compound is one containing at least two metals such as lithium, magnesium, chromium, manganese, iron, nickel and aluminum. Among them, preferred is one containing magnesium and aluminum, or magnesium and iron, more preferred is one containing magnesium and aluminum. As the inorganic compound, preferred is one containing a metal hydroxide. (ii) One obtained by treating a phyllosilicate containing no cationic inorganic compound between layers to introduce a cationic inorganic compound between layers of the phyllosilicate

A phyllosilicate containing no cationic inorganic compound between layers as listed in the following (ii-1) is reacted with an inorganic compound which exhibits cationic properties when introduced between layers as described in the following (ii-2) to introduce a cationic inorganic compound between layers.

### (ii-1) Phyllosilicate containing no cationic inorganic compound between layers

Specifically, for example, smectite minerals such as montmorillonite, sauconite, beidellite, nontronite, saponite and hectorite; vermiculite minerals such as vermiculite; mica minerals such as illite, sericite, glauconite, muscovite and phlogopite; kaolinite minerals such as kaolinite, dickite, nacrite and halloysite; clays and clay minerals such as sepiolite, palygorskite, bentonite, kibushi clay, gairome clay, hisingerite and pyrophillite, and mixed-layer minerals thereof; and synthetic phyllosilicates such as synthetic mica, synthetic hectorite, synthetic saponite and synthetic tainiolite may be mentioned.

### (ii-2) Method of introducing a cationic inorganic compound between layers

The phyllosilicate listed in the above (ii-1) and an inorganic compound which exhibits cationic properties when introduced between layers are reacted to obtain a phyllosilicate containing a cationic inorganic compound between layers. As its method, a conventional method may be employed.

For example, in the case of introducing a cationic metal hydroxide between layers, preferred is a method of mixing a metal hydroxide solution and a dispersion liquid of the phyllosilicate listed in the above (ii-1). One example is specifically described below.

### (ii-2-1) Metal hydroxide solution

The metal hydroxide solution can be obtained, for example, by bringing a metal halide and an alkali into contact with each other in a solvent. The metal halide is not particularly limited, and a halide or an oxyhalide may be used. For example, in the case of aluminum or zirconium, aluminum chloride, zirconium oxychloride or the like is preferably used. The alkali is not particularly limited so long as it can make a metal halide be a hydroxide, but sodium hydroxide is preferably used. The solvent is usually a polar solvent and is preferably water.

The concentration of the metal halide in the solution is not particularly limited, but is preferably at least 0.01 mol/L, more preferably at least 0.1 mol/L and preferably at most 10 mol/L, more preferably at most 1 mol/L. The alkali concentration is not particularly limited so long as the metal halide can be made a hydroxide. For example, by the molar ratio relative to the metal halide, it is usually at least 0.1, preferably at least 0.5, more preferably at least 1, and usually at most 50, preferably at most 20, more preferably at most 10.

The metal hydroxide solution is prepared by heating and aging the solution at a temperature between room temperature and the boiling point of the solvent for preferably at least 0.5 hour, more preferably at least one hour and preferably at most 10 hours, more preferably at most 5 hours.

### (ii-2-2) Dispersion liquid of the phyllosilicate

The solvent of the dispersion liquid is preferably a polar solvent, particularly preferably water. In addition, it is preferably a solvent miscible with the above metal hydroxide solution, more preferably the same solvent as in the metal hydroxide solution. The concentration of the phyllosilicate in the dispersion liquid is preferably at least 0.1 wt%, more preferably at least 0.5 wt%, and preferably at most 10 wt%, more preferably at most 5 wt%.

### (ii-2-3) Mixing of the phyllosilicate dispersion liquid with the aged solution of the metal hydroxide

The mixture ratio, by the amount of metal ions of the metal hydroxide to the ion exchanging capacity of the phyllosilicate, is preferably at least 0.1 equivalent amount, more preferably at least 10 equivalent amounts and preferably at most 1,000 equivalent amounts, more preferably at most 500 equivalent amounts, particularly preferably at most 100 equivalent amounts. The aged solution of the metal hydroxide may be added to the phyllosilicate dispersion liquid, vice versa, or they may be simultaneously added to a container for mixing.

Mixing is carried out by stirring or shaking at a temperature between room temperature and the boiling point of the solvent. The mixing time is preferably at least 0.5 hour, more preferably at least one hour, and preferably at most 10 hours, more preferably at most 5 hours. Then, the obtained slurry is subjected to filtration, washing, drying and pulverization to prepare a powdery aimed compound.

The obtained aimed compound is preferably stored in a dry inert gas atmosphere and used immediately after preparation.

### 2. Modified olefin polymer having a functional group

The modified olefin polymer having a functional group, constituting the modified olefin polymer composition of the present invention, may be one having a functional group in the main chain of an olefin polymer or may be one having a functional group as a side chain bonded to the main chain of an olefin polymer directly or via a bivalent group. Among them, particularly preferred is one having a functional group as a side chain bonded to the main chain of an olefin polymer via a bivalent group.

The modified olefin polymer has a molecular weight by the weight average molecular weight of preferably at least 2,000, more preferably at least 5,000, particularly preferably at least 10,000, and preferably at most 1,000,000, more preferably at most 500,000, particularly preferably at most 200,000. Mw (weight average molecular weight)/Mn (number average molecular weight) is not particularly limited but is usually at least 1, and usually at most 20, preferably at most 15, more preferably at most 10.

The isotactic pentad fraction is not particularly limited but is usually at least 0.3, preferably at least 0.5, more preferably at least 0.6, furthermore preferably at least 0.9, particularly preferably at least 0.95, and at most 1.0, preferably at most 0.98, more preferably at most 0.95, furthermore preferably at most 0.9. If the isotactic pentad fraction is low, rigidity or heat resistance tends to decrease after molding.

The modified olefin polymer having a functional group is obtained by imparting a functional group to an olefin polymer as a precursor.

### (1) Olefin polymer as a precursor.

Specifically, the olefin polymer as a precursor may, for example, be a homopolymer of an α-olefin having from about 2 to about 8 carbon atoms, such as ethylene, propylene or 1-butene or a bipolymer, a terpolymer or the like of such an olefin with another α-olefin having from about 2 to about 18 carbon atoms such as ethylene, propylene, 1-butene, 3-methyl-1-butene, 1-pentene, 4-methyl-1-pentene, 4,4-dimethyl-1-pentene, 1-hexene, 4-methyl-1-hexene, 1-heptene, 1-octene, 1-decene or 1-octadecene.

Specifically, it may, for example, be an ethylene resin such as an ethylene homopolymer such as a branched low density polyethylene or a linear high density polyethylene, an ethylene/propylene copolymer, an ethylene/1-butene copolymer, an ethylene/propylene/1-butene copolymer, an ethylene/4-methyl-1-pentene copolymer, an ethylene/1-hexene copolymer, an ethylene/1-heptene copolymer or an ethylene/1-octene copolymer; a propylene resin such as a propylene homopolymer, a propylene/ethylene copolymer or a propylene/ethylene/1-butene copolymer; a 1-butene resin such as a 1-butene homopolymer, a 1-butene/ethylene copolymer or a 1-butene/propylene copolymer; or a 4-methyl-1-pentene resin such as a 4-methyl-1-pentene homopolymer or a 4-methyl-1-pentene/ethylene copolymer.

Further, it may be a bipolymer, a terpolymer or the like of ethylene and/or an α-olefin, with a nonconjugated diene such 1,4-hexadiene, 4-methyl-1,4-hexadiene, 5-methyl-1,4-hexadiene, 6-methyl-1,5-heptadiene, 1,4-octadiene, 7-methyl-1,6-octadiene, cyclohexadiene, cyclooctadiene, dicyclopentadiene, 5-methylene-2-norbornene, 5-ethylidene-2-norbornene, 5-butylidene-2-norbornene or 5-isopropenyl-2-norbornene. The terpolymer or the like may, for example, be an olefin rubber such as an ethylene/propylene/non-conjugated diene copolymer or an ethylene/1-butene/non-conjugated diene copolymer.

Such olefin polymers may be used in combination of two or more of them. Among them, preferred is an ethylene resin or a propylene resin, more preferred is a propylene resin, furthermore preferred is an ethylene/propylene copolymer or a propylene homopolymer, most preferred is a propylene homopolymer.

### (2) Functional group

The functional group of the modified olefin polymer is preferably a group capable of forming an anion or a cation, or a polar group, more preferably a group capable of forming an anion or a cation, particularly preferably a group capable of forming a cation. The group capable of forming an anion and the group capable of forming a cation are easily inserted between layers of the phyllosilicate, by the interaction with cations between layers of the phyllosilicate and by the interaction with anions between layers of the phyllosilicate, respectively, and are capable of accelerating delamination of the phyllosilicate. The group capable of forming an anion may, for example, be a group having an oxygen atom, a group having a sulfur atom or a group having a phosphorus atom. The group capable of forming a cation may, for example, be a group having a nitrogen atom.

Specifically, the functional group may, for example, be a carboxyl group, a carboxylic anhydride group, a carboxylate ester group, a hydroxyl group, an epoxy group, an amide group, an ammonium group, a nitrile group, an amino group, an imide group, an isocyanate group, an acetyl group, a thiol group, an ether group, a thioether group, a sulfone group, a phosphone group, a nitro group or a urethane group. The polymer may have two or more such functional groups. Among them, preferred is a carboxyl group, a carboxylic anhydride group, a carboxylate ester group, a hydroxyl group, an ammonium group, an amino group, an imide group or an isocyanate group, more preferred is an ammonium group.

In a case where the polymer has such a functional group as a side chain bonded to the main chain of an olefin polymer via a bivalent group, the bivalent group is not particularly limited. Specifically, it may, for example, be a linear, branched or cyclic aliphatic hydrocarbon group having from about 1 to about 20 carbon atoms, such as a methylene group, an ethylene group, a trimethylene group or a tetramethylene group, an aromatic hydrocarbon group such as a phenylene group or a naphthylene group, or an alkyleneoxy group such as a methyleneoxy group, an ethyleneoxy group, a trimethyleneoxy group or a tetramethyleneoxy group.

The amount of the functional group, by the average equivalent amount per one molecule of the olefin polymer, is preferably at least 0.1 equivalent amount, more preferably at least 0.2 equivalent amount, particularly preferably at least 0.4 equivalent amount, and preferably at most 10 equivalent amounts, more preferably at most 5 equivalent amounts, particularly preferably at most 1 equivalent amount. If the amount of the functional group is less than the above range, the modified olefin polymer tends to be hardly inserted between layers of the phyllosilicate, and on the other hand, if it exceeds the above range, delamination of the phyllosilicate tends to be impaired when a modified olefin polymer composition to be obtained as a masterbatch is diluted with an olefin polymer to prepare an olefin polymer composition.

### (3) Method for producing a modified olefin polymer having a functional group

To convert the olefin polymer as a precursor to a modified olefin polymer having a functional group, any conventional method among e.g. the following methods (i) to (v) may be employed.
(i) A method of grafting an ethylenic unsaturated monomer having a functional group to an olefin polymer.
(ii) A method of copolymerizing an α-olefin with an ethylenic unsaturated monomer having a functional group protected by a protective group as the case requires, followed by removal of the protective group.
(iii) A method of reacting an olefin polymer with a trifunctional or higher polyfunctional monomer by e.g. radical polymerization to bind polyolefin chains by the polyfunctional monomer thereby to incorporate a functional group to the main chain of the olefin polymer.
(iv) A method for incorporating a functional group as a side chain to the main chain of an olefin polymer by e.g. a method of reacting a functional group-containing compound.
(v) A method of heating and oxdizing an olefin polymer in the presence of molecular oxygen to form a carbonyl at the terminal of the olefin polymer and reducing the carbonyl by a reducing agent in an inert atmosphere to convert it to a hydroxyl group.

In the modified olefin polymer having a functional group in the present invention, the functional group is preferably present locally in a modified olefin polymer molecule. Particularly, the functional group is present preferably at the molecular terminal. The molecular terminal includes a portion near the molecular terminal. Specifically, preferred is a modified olefin polymer in which the functional group is bonded to any of first to fifth carbon atoms from the molecular terminal, particularly first and second carbon atoms, and most preferred is a modified olefin polymer in which the functional group is bonded to the carbon atom at the molecular terminal.

In the description of the bonding position of the functional group, in a case where the functional group is bonded as a side chain to the main chain of the olefin polymer via a bivalent group, the functional group means a moiety including said bivalent group. For example, when a 4-(2-aminoethyl)phenyl group is bonded to the side chain, the functional group is the 4-(2-aminoethyl)phenyl group, not an amino group.

The reason why the above polymers are preferred is supposed that these polymers as the modified olefin polymer composition prevent inhibition of delamination of the layers which is caused by crosslinking of the phyllosilicate layers containing cations of an inorganic compound between them.

The amount of functional group present at the molecular terminal or near the molecular terminal, by the molar ratio of all functional groups, is preferably at least 0.5, more preferably at least 0.7, furthermore preferably at least 0.9, most preferably at least 0.95. The position of the functional group near the terminal of the modified olefin polymer can be specified e.g. by NMR.

To obtain a modified olefin polymer having a functional group at the molecular terminal or near the terminal, the above methods (i), (ii) and (v) are preferably mentioned. The method (ii) is more preferred. For example, in the method (i), the amount of the ethylenic unsaturated monomer to be used is reduced so that the amount of the functional group per one molecule is at most 1 and as a result, the functional group will be present locally. Further, in the method (ii), in accordance with the method disclosed in Macromolecules, 2002, 35, 9352, the ethylenic unsaturated monomer having a functional group is copolymerized with the terminal of the olefin polymer so that the functional group is present at the terminal.

Now, the methods (i) and (ii) will be described in detail as specific examples.

### (i) Method of grafting an ethylenic unsaturated monomer having a functional group to an olefin polymer

### (i-1) Ethylenic unsaturated monomer having a functional group

An ethylenic unsaturated monomer having a carboxyl group, a carboxylate anhydride group, a carboxylate ester group, a hydroxyl group, an epoxy group, an amide group, a nitrile group, an amino group, an imide group, an isocyanate group, an acetyl group or the like may be used.

As the functional groups, the following may be mentioned respectively. Examples of an ethylenic unsaturated monomer having a carboxyl group: (meth)acrylic acid (here, "(meth)acrylic" means "acrylic" and/or "methacrylic"), crotonic acid, isocrotonic acid, maleic acid, fumaric acid, itaconic acid and citraconic acid; examples of an ethylenic unsaturated monomer having a carboxylic anhydride group: maleic anhydride, itaconic anhydride and citraconic anhydride; examples of an ethylenic unsaturated monomer having a carboxylate ester group: methyl (meth)acrylate, ethyl (meth)acrylate, propyl (meth)acrylate and butyl (meth)acrylate; examples of an ethylenic unsaturated monomer having a hydroxyl group: 2-hydroxyethyl (meth)acrylate, 2-hydroxypropyl (meth)acrylate, 2,3-dihydroxypropyl (meth)acrylate, 2-hydroxymethyl-3-hydroxypropyl (meth)acrylate, 2,2-dihydroxymethyl-3-hydroxypropyl (meth)acrylate, 2-hydroxybutyl (meth)acrylate and 4-hydroxybutyl (meth)acrylate; examples of an ethylenic unsaturated monomer having an epoxy group: glycidyl (meth)acrylate, propylglycidyl maleate, butylglycidyl maleate, propylglycidyl fumarate and butylglycidyl fumarate; examples of an ethylenic unsaturated monomer having an amide group: (meth)acrylamide; examples of an ethylenic unsaturated monomer having a nitrile group: (meth)acrylonitrile; examples of an ethylenic unsaturated monomer having an amino group: aminoethyl (meth)acrylate; examples of an ethylenic unsaturated monomer having an imide group: maleimide; examples of an ethylenic unsaturated monomer having an isocyanate group: 2-isocyanate ethyl(meth)acrylate, (meth)acryloyl isocyanate, vinyl isocyanate and isopropenyl isocyanate; and examples of an ethylenic unsaturated monomer having an acetyl group: vinyl acetate.

Grafting of the ethylenic unsaturated monomer having a functional group may be either melt grafting carried out in a state where the olefin polymer is molten, or solution grafting carried out in a solution state in an organic solvent, in the presence of a radical initiator.

### (i-2) Radical initiator

The radical initiator to be used in the above grafting may, for example, be specifically a dialkyl peroxide such as di-t-butyl peroxide, t-butylcumyl peroxide, dicumyl peroxide, 2,5-dimethyl-2,5-di(t-butyl peroxy)hexane, 2,5-dimethyl-2,5-di(t-butyl peroxy)hexine-3 or 1,3-bis(t-butyl peroxyisopropyl)benzene; a peroxyester such as t-butyl peroxyacetate, t-butyl peroxy-2-ethylhexanoate, t-butyl peroxypivalate, t-butyl peroxybenzoate, t-butyl peroxyisopropyl carbonate, 2,5-dimethyl-2,5-di(benzoylperoxy)hexane or 2,5-dimethyl-2,5-di(benzoylperoxy)hexine-3; a diacyl peroxide such as 3,5,5-trimethylhexanoyl peroxide, octanoyl peroxide or benzoyl peroxide; a hydroperoxide such as t-butyl hydroperoxide, cumene hydroperoxide, diisopropylbenzene hydroperoxide or 2,5-dimethyl-2,5-di(hydroperoxy)hexane; a ketone peroxide such as methyl ethyl ketone peroxide or cyclohexanone peroxide; or an azo compound such as 2,2'-azobisisobutyronitrile, 2,2'-azobis(isobutylamide)dihalide, 2,2'-azobis[2-methyl-N-(2-hydroxyethyl)propionamide] or azodi-t-butane. Two or more of such radical initiators may be used in combination.

### (i-3) Reaction method

Reaction may be carried out either by a molten method or a solution method.

In the molten method, the grafting may be carried out by using a kneading machine such as a single screw extruder or a twin screw extruder, a horizontal twin screw stirring machine such as a horizontal twin screw multidisk apparatus, or a vertical stirring machine such as a double helical ribbon stirring machine.

An olefin polymer, the above ethylenic unsaturated monomer in an amount of usually at least 0.005 phr by weight, preferably at least 0.1 phr by weight and usually at most 20 phr by weight, preferably at most 10 phr by weight, and the above radical initiator in an amount of usually at least 0.001 phr by weight, preferably at least 0.01 phr by weight and usually at most 10 phr by weight, preferably at most 5 phr by weight, per 100 phr by weight of the olefin polymer, are reacted. The reaction is carried out by melting the olefin polymer at a temperature of usually at least 100°C and usually at most 300°C, preferably at most 200°C usually for about 0.5 to about 10 minutes.

In the solution method, in an aromatic solvent such as toluene, xylene or chlorobenzene, an olefin polymer, the above ethylenic unsaturated monomer in an amount of usually at least 0.1 phr by weight, preferably at least 3 phr by weight and usually at most 100 phr by weight, preferably at most 50 phr by weight, and the above radical initiator in an amount of usually at least 0.5 phr by weight, preferably at least 1 phr by weight and usually at most 50 phr by weight, preferably at most 30 phr by weight, per 100 phr by weight of the olefin polymer, are added. The reaction is carried out by dissolving the above olefin polymer at a temperature of usually from about 80 to about 140°C usually for about 0.1 to about 8 hours.

### (ii) Method of copolymerizing an α-olefin with an ethylenic unsaturated monomer having a functional group protected by a protective group as the case requires, followed by removal of the functional group

### (ii-1) α-Olefin

The α-olefin may be preferably an α-olefin having from about 2 to about 8 carbon atoms, such as ethylene, propylene or 1-butene. They may be used alone or in combination as a mixture of two or more.

### (ii-2) Ethylenic unsaturated monomer having a functional group

An ethylenic unsaturated monomer having a carboxyl group, an acid anhydride group, a hydroxyl group, an amino group, a thiol group, a sulfone group, a phosphone group or the like may be used. In order to prevent such a functional group from deactivating an olefin polymerization catalyst, the functional group is protected by e.g. a trialkylsilyl group, a dialkylaluminum group or the like as the case requires to inhibit reaction of the functional group with the catalyst.

As examples of the ethylenic unsaturated monomer having a functional group, the ethylenic unsaturated monomer having a carboxyl group as a functional group may, for example, be (meth)acrylic acid ("(meth)acrylic" means "acrylic" and/or "methacrylic"), crotonic acid, isocrotonic acid, maleic acid, fumaric acid, itaconic acid or citraconic acid. The ethylenic unsaturated monomer having an acid anhydride group may, for example, be maleic anhydride, itaconic anhydride or citraconic anhydride. The ethylenic unsaturated monomer having a hydroxyl group may, for example, be 2-hydroxyethyl (meth)acrylate, 2-hydroxypropyl (meth)acrylate, 2,3-dihydroxypropyl (meth)acrylate, 2-hydroxymethyl-3-hydroxypropy (meth)acrylate, 2,2-dihydroxymethyl-3-hydroxypropyl (meth)acrylate, 2-hydroxybutyl (meth)acrylate or 4-hydroxybutyl (meth)acrylate. The ethylenic unsaturated monomer having an amino group may, for example, be (meth)acrylamide, 4-aminostyrene, 4-aminomethylstyrene or 4-(2-aminoethyl)styrene. The ethylenic unsaturated monomer having a nitrile group may, for example, be (meth)acrylonitrile. The ethylenic unsaturated monomer having an amino group may, for example, be aminoethyl (meth)acrylate.

### (ii-3) Copolymerization

Copolymerization of the ethylenic unsaturated monomer having a functional group may be carried out, for example, by using the following catalyst system.
(a) A catalyst for α-olefin polymerization containing the following components (A), (B) and (C) and an optional component (D).
   Component (A): metallocene compound
   Component (B): at least one compound selected from the group consisting of an organic aluminumoxy compound, an ionic compound capable of reacting with the component (A) to convert the component (A) to a cation and a Lewis acid Component (C): chain transfer agent
   Component (D): fine particle carrier
(b) A catalyst for α-olefin polymerization containing the following components (A), (C) and (E) and an optional component (F).
   Component (A): metallocene compound
   Component (C): chain transger agent
   Component (E): at least one compound selected from the group consisting of an ion exchangeable lamellar compound except for a silicate, and an inorganic silicate. Component (F): organic aluminum compound

In (a) and (b), the metallocene may be properly selected from known ones. The chain transfer agent is not particularly limited but hydrogen is suitably used. The fine particle carrier in (a) may be known one such as silica, alumina or silica-alumina.

The method of the polymerization reaction is not particularly limited, but is preferably solution polymerization or bulk polymerization. In the case of the solution polymerization, the solvent may, for example, be specifically a hydrocarbon such as n-pentane, n-hexane, n-heptane, n-octane, n-decane, benzene, toluene, xylene, cyclohexane, methylcyclohexane or dimethylcyclohexane; a halogenated hydrocarbon such as chloroform, methylene chloride, carbon tetrachloride, tetrachloroethane, chlorobenzene or o-dichlorobenzene; or a polar solvent such as n-butyl acetate, methyl isobutyl ketone, tetrahydrofuran, cyclohexanone or dimethyl sulfoxide. Among them, a hydrocarbon is preferred, and an aromatic hydrocarbon is particularly preferred. Further, a mixture of the above compounds may be used as a solvent.

The catalyst concentration is not particularly limited, but in the case of the solution polymerization for example, the metallocene compound concentration is usually at most 100 g, preferably at most 50 g, most preferably at most 25 g in 1 L of the reaction liquid. Further, it is usually at least 0.01 mg, preferably at least 0.05 mg, most preferably at least 0.1 mg.

The polymerization temperature, the polymerization pressure and the polymerization time are not particularly limited, but usually they are optimally set from the following ranges considering the productivity and the process capability. That is, the polymerization temperature is usually at least -20°C, preferably at least 0°C and at most 150°C, preferably at most 100°C. Further, the polymerization pressure is usually at least 0.01 MPa, preferably at least 0.05 MPa, most preferably at least 0.1 MPa, and at most 100 MPa, preferably at most 20 MPa, most preferably at most 5 MPa. The polymerization time is usually at least 0.1 hour, preferably at least 0.2 hour, most preferably at least 0.3 hour and usually at most 30 hours, preferably at most 25 hours, more preferably at most 20 hours, most preferably at most 15 hours.

### 3. Modified olefin polymer composition

The modified olefin polymer composition is obtained by mixing a phyllosilicate containing cations of an inorganic compound between layers with a modified olefin polymer having a functional group.

The modified olefin polymer composition of the present invention comprises the phyllosilicate dispersed in a delaminated state. It is considered that by the combination of the phyllosilicate containing cations of an inorganic compound between layers and the modified olefin polymer having a functional group in the present invention, the phyllosilicate undergoes delamination and re-coagulation of the delaminated layers is prevented.

The ratios of them in the modified olefin polymer composition based on the total amount of them are preferably such that the phyllosilicate is at least 5 wt% and at most 95 wt%, and the modified olefin polymer is at most 95 wt% and at least 5 wt%, more preferably the phyllosilicate is at least 10 wt% and at most 85 wt% and the modified olefin polymer is at most 90 wt% and at least 15 wt%, particularly preferably the phyllosilicate is at least 15 wt% and at most 75 wt% and the modified olefin polymer is at most 85 wt% and at least 25 wt%.

If the ratio of the phyllosilicate is less than the above range and the ratio of the modified olefin polymer exceeds the above range, the modified olefin polymer composition will no more has a function as a masterbatch. On the other hand, if the ratio of the phyllosilicate exceeds the above range and the ratio of the modified olefin polymer is less than the above range, the phyllosilicate tends to be hardly dispersed in a homogeneously and finely delaminated state in the modified olefin polymer.

### (1) Method for preparing the modified olefin polymer composition

The method for preparing the modified olefin polymer composition by mixing is not particularly limited so long as the phyllosilicate is dispersed in the modified olefin polymer having a functional group in a delaminated state accordingly.

In order that the phyllosilicate is sufficiently delaminated, it is preferred that the modified olefin polymer having a functional group is melted or dissolved in a state where the modified olefin polymer having a functional group and the phyllosilicate containing a cationic inorganic compound between layers are in contact with each other.

Specifically, (i) a method of dry blending the phyllosilicate containing cations of an inorganic compound between layers and the modified olefin polymer having a functional group and then melting the mixture, or (ii) a method of melt-kneading them, may, for example, be preferably mentioned. In addition, a method of mixing them in a solution and removing the solution may, for example, be considered.

### (i) Method of dry blending them and melting the mixture

They are uniformly mixed by e.g. a tumbler blender, a ribbon blender, a V-type blender, a Henschel mixer or the like. Then, an additive such as an antioxidant to be used as the case requires is added to the resulting mixture, which is formed to a composition via a molten state. Specifically, for example, the mixture is merely melted, or melt-kneaded by e.g. a single screw or twin screw extruder, a roller, a Banbury mixer, a kneader or a brabender. The temperature at the time of melting or melt-kneading is preferably at least 100°C, more preferably at least 150°C and preferably at most 300°C, more preferably at most 250°C. The time is preferably from about 0.5 to about 30 minutes.

### (ii) Method of melt-kneading them

They are melt-kneaded with an additive such as an antioxidant to be used as the case requires. For example, they are melt-kneaded by e.g. a single screw or twin screw extruder, a roller, a Banbury mixer, a kneader or a brabender. The temperature at the time of melt-kneading is preferably at least 100°C, more preferably at least 150°C and preferably at most 300°C, more preferably at most 250°C. The time is preferably from about 0.5 to about 30 minutes.

### 4. Olefin polymer composition

The modified olefin polymer composition of the present invention may be used as it is as a molding material, but the modified olefin polymer composition as a masterbatch is preferably diluted with an olefin polymer to obtain an olefin polymer composition, which is used as a molding material. The olefin polymer for dilution may be the same modified olefin polymer as described above, but in view of cost, preferred is a non-modified olefin polymer having no functional group.

The olefin polymer used for dilution may be the same olefin polymer mentioned as the precursor of the modified olefin polymer. The molecular weight of the olefin polymer by the weight average molecular weight is preferably at least 2,000, more preferably at least 5,000, particularly preferably at least 10,000 and preferably at most 1,000,000, more preferably at most 800,000, particularly preferably at most 600,000. Mw/Mn is not particularly limited but is usually at least 1, preferably at least 2 and usually at most 20, preferably at most 10, more preferably at most 7.

The isotactic pentad fraction is not particularly limited but is usually at least 0.85, preferably at least 0.9, more preferably at least 0.95, furthermore preferably at least 0.98 and at most 1.0, preferably at most 0.995. The higher the isotactic pentad fraction, the more rigidity and heat resistance of a molded product usually improve.

The blend ratio of the modified olefin polymer composition and the olefin polymer is such that the content of the phyllosilicate based on the total amount of the obtained olefin polymer composition is preferably at least 0.5 wt%, more preferably at least 1 wt%, particularly preferably at least 2 wt%, and preferably at most 50 wt%, more preferably at most 45 wt%, particularly preferably at most 40 wt%. If the content of the phyllosilicate is less than the above range, no sufficient aimed object of improving physical properties of the olefin polymer composition by blending of the phyllosilicate tend to be obtained, and on the other hand, if it exceeds the above range, the olefin polymer composition tends to have impaired moldability or to be fragile.

Further, the olefin polymer composition is suitably diluted with the olefin polymer in an amount of usually at least 20 wt%, preferably at least 40 wt%, more preferably at least 60 wt%, furthermore preferably at least 80%, particularly preferably at least 90 wt%, most preferably at least 95 wt% and usually at most 99 wt%, preferably at most 98 wt%, more preferably at most 97 wt% based on the total amount of the composition. If the amount of the olefin polymer for dilution is small, the cost tends to rise, and if it is large, the change in physical properties tends to be small.

To the modified olefin polymer composition and/or the olefin polymer composition of the present invention, as the case requires, various commonly used additives such as an antioxidant, a photostabilizer, an ultraviolet absorber, a nucleating agent, a neutralizing agent, a lubricant, an antiblocking agent, a dispersant, a fluidity-improving agent, a mold release agent, a flame retardant, a blowing agent, a coloring agent and a filler except for the above phyllosilicate may be added.

The olefin polymer composition of the present invention is prepared by mixing the modified olefin polymer and the olefin polymer together with additives or the like used as the case requires, by e.g. a tumbler blender, a ribbon blender, a V-type blender or a Henschel mixer as the case requires, and melt-kneading the mixture by e.g. a single screw or twin screw extruder, a roller, a Banbury mixer, a kneader or a brabender.

According to the present invention, physical properties of the olefin polymer to be used for dilution can be improved. Specifically, improvement of the physical properties includes improvement of rigidity, improvement of gas barrier properties, improvement of flame retardancy, a decrease in the mold shrinkage factor and a decrease in the coefficient of thermal expansion. For example, by the olefin polymer containing the modified olefin polymer composition of the present invention, the flexural modulus of the olefin polymer will be increased to usually at least 120%, preferably at least 150%, more preferably at least 180%, most preferably at least 200%. Further, improvement of the flexural modulus is usually at most 500%.

### EXAMPLES

Now, the present invention will be described in further detail with reference to Examples. However, the present invention is by no means restricted to the following Examples within a range not to exceed the scope of the invention.

In Examples, the flexural modulus was measured by the following method.

### (Flexural modulus)

A test specimen with a length of 80 mm, a width of 10 mm and a thickness of 4 mm was prepared by compression molding in accordance with JIS K7171, and subjected to 3-point loading test in a 23°C and 50% RH environment with a distance between support span of 64 mm to measure the flexural modulus.

### EXAMPLE 1

### (Phyllosilicate containing cations of an inorganic compound between layers)

Clinochlore (chlorite "C1", manufactured by Iriki Kaolin Corp.) containing sheets of a hydroxide containing magnesium and aluminum as inorganic compound cations between layers was used,

### (Modified olefin polymer having a functional group)

It was prepared in accordance with the method disclosed in Macromolecules, 2003, 36, 8919 as follows.

In a 500 ml round bottom flask, the interior of which was replaced with nitrogen and in which a magnetic stirrer was put, 50 ml of chloromethyl methyl ether and 50 ml of tetrahydrofuran were introduced and cooled to 0°C. Then, a solution having 100 g of lithium bis(trimethylsilyl)amide dissolved in 200 ml of tetrahydrofuran was slowly dropped so that the internal temperature would not depart from about 0°C. After completion of the dropping, the temperature of the solution was raised to room temperature over a period of 2 hours, and surplus chloromethyl methyl ether and tetrahydrofuran were distilled off, followed by distillation to obtain 89.4 g of N,N-bis(trimethylsilyl)methoxymethylamine.

In another 500 ml round bottom flask provided with a reflux condenser, in which a magnetic stirrer was put, 11.6 g of magnesium wires and 40 ml of dry ether were introduced, and 68 ml of 4-vinylbenzyl chloride diluted with 40 ml of dry ether was dropped from the upper portion of the condenser. The solution was refluxed for 4 hours, and 89.4 g of the above obtained N,N-bis(trimethylsilyl)methoxymethylamine was introduced over a period of 2 hours. Then, reaction was conducted at room temperature for 2 hours, and 100 ml of a 30% sodium hydroxide aqueous solution was introduced. Then, the organic layer was separated and dried, and the residue was subjected to distillation with calcium hydride to obtain 89 g of 4-{2-[N,N-bis(trimethylsilyl)amino]}ethylstyrene.

Then, using 1.25 µmol of rac-dichlorodimethylsilylenebis[2-methyl-4-phenylindenyl]zirconium as a catalyst, 4.5 ml of methylaluminoxane (10 wt% solution) as a promoter and 50 ml of toluene as a solvent, 0.76 MPa of propylene pressure and 1.0 ml of the above obtained 4-{2-[N,N-bis(trimethylsilyl)amino]}ethylstyrene was polymerized under a hydrogen pressure of 0.07 MPa at 45°C for 15 minutes. The reaction was terminated by introduction of methanol, and the product was subjected to filtration, washed with tetrahydrofuran and then vacuum dried at 50°C for 8 hours to obtain 15 g of a propylene homopolymer having a 4-{2-[N,N-bis(trimethylsilyl)amino]}ethylphenyl group at the terminal. 2 g of the obtained polymer was suspended in 50 ml of toluene, the suspension was heated at 50°C, a 2 N hydrochloric acid ether solution was added, and the content was stirred at 50°C for 5 hours. Then, the content was poured into a 1 N sodium hydroxide methanol solution. The obtained polymer was subjected to filtration in a nitrogen atmosphere, washed with 1 M ammonia water and water, and vacuum dried at 50°C for 10 hours to obtain a modified propylene homopolymer having 0.035 mmol/g of ammonium groups at the terminal, having an isotactic pentad fraction of 0.931 and a weight average molecular weight of 47,000 as a modified olefin polymer.

2 g of the above phyllosilicate and 2 g of the above modified olefin polymer were dry-blended and subjected to heat treatment in vacuum at 190°C for 2 hours.

### (Olefin polymer composition)

Then, to 4 g of the obtained modified olefin polymer composition and 36 g of a powder of a polypropylene homopolymer resin ("MA1B", manufactured by Japan Polypropylene Corporation) as an olefin polymer, 0.02 g of tetrakis[methylene-3-(3',5'-di-t-butyl-4'-hydroxyphenyl)propionate]methane ("Irganox1010", manufactured by Ciba Specialty Chemicals), 0.02 g of dit-butylphenyl phosphite ("Irgaphos168" manufactured by Ciba Specialty Chemicals) and 0.012 g of hydrotalcite ("DHT-4A" manufactured by Kyowa Chemical Industry Co., Ltd.) as antioxidants were added, and the mixture was dry-blended and melt kneaded at 160°C for 4 minutes by LABO PLASTOMILL (manufactured by Toyo Seiki Seisaku-sho Ltd.) to prepare an olefin polymer composition. With respect to the obtained olefin polymer composition, the flexural modulus was measured by a method described hereinafter and was 2,800 MPa. The flexural modulus of a polypropylene homopolymer resin ("MA1B" manufactured by Japan Polypropylene Corporation) was 1,910 MPa.

### COMPARATIVE EXAMPLE 1

An olefin polymer composition was produced in the same manner as in Example 1 except that montmorillonite ("KunipiaF" manufactured by KUNIMINE INDUSTRIES CO., LTD.) containing mainly sodium ions as the cations between layers was used instead of clinochlore. With respect to the obtained olefin polymer composition, the flexural modulus was measured by the above method and was 2,230 MPa.

### EXAMPLE 2

An olefin polymer composition was produced in the same manner as in Example 1 except that a maleic anhydride modified olefin polymer was used as the modified olefin polymer having a functional group. With respect to the obtained olefin polymer composition, the flexural modulus was measured by the above method and was 2,680 MPa.

### (Modified olefin polymer having a functional group)

The maleic anhydride modified olefin polymer was produced as follows.

Using 8 µmol of anti/syn = 5/5 mixture of dichlorodimethylsilylene(2-methyl-4-phenylazulenyl) [10-(N-phenylindeno[b]indolyl)]hafnium as a catalyst, 35 mL of methylaluminoxane (5.7 wt% solution) as a cocatalyst and 1,400 mL of liquid propylene, polymerization was conducted at 70°C for 2 hours. 160.5 g of polypropylene having a weight average molecular weight of 64,000, a number average molecular weight of 4,300, an isotactic pentad fraction of 0.644, and the number of terminal unsaturated bonds of 28.8 per 10,000 carbon atoms was obtained. 20 g of this polypropylene and 35 phr of maleic anhydride by weight were dissolved in 200 mL of tert-butylbenzene, and a tert-butylbenzene solution of 4.6 phr of 1,1-azobis(cyclohexane-1-carbonitrile) by weight was dropped under reflux. After completion of the dropping, reflux was continued for 3 hours. The product was reprecipitated in acetone and washed with acetone, and such operation was repeated, and the obtained solid was vacuum dried to obtain a polypropylene having 0.62 maleic anhydride group introduced per one molecule.

### COMPARATIVE EXAMPLES 2 AND 3

An olefin polymer composition was produced in the same manner as in Example 2 except that montmorillonite ("KunipiaF" manufactured by KUNIMINE INDUSTRIES CO., LTD.) (Comparative Example 2) or organophilic montmorillonite ("I.30T" manufactured by Nanocor) (Comparative Example 3) was used instead of clinochlore. With respect to the obtained olefin polymer compositions, the flexural moduli were measured by the above method and were 2,130 MPa and 2,390 MPa, respectively.

### EXAMPLE 3

An olefin polymer composition was produced in the same manner as in Example 1 except that a hydroxyl group modified olefin polymer was used as the modified olefin polymer having a functional group. With respect to the obtained olefin polymer composition, the flexural modulus was measured by the above method and was 2,680 MPa.

### (Modified olefin polymer having a functional group)

The hydroxyl group modified olefin polymer was produced as follows.

4 g of the polypropylene obtained in the same manner as in Example 2 was suspended in 100 mL of tetrahydrofuran, and 9-borabicyclononane (9-BBN) in 5 equivalent amounts per number of polymer molecules was added, followed by reflux for 5 hours. The solid was collected by filtration, washed with isopropanol and dried. Then, the obtained polymer was suspended again in 100 mL of tetrahydrofuran, and a water/methanol (4 mL/1 ml) solution comprising 0.8 g of sodium hydroxide was added at room temperature. The suspension was once cooled to 0°C, a H₂O₂ aqueous solution (30 wt%, 3.2 mL) was dropped, followed by reaction at 40°C for 7 hours. The slurry after the reaction was introduced in a large amount of methanol, and the solid was collected by filtration, washed with methanol and dried to obtain a polymer. It was confirmed by NMR that introduction of OH proceeded substantially quantitatively.

### COMPARATIVE EXAMPLES 4 AND 5

An olefin polymer composition was produced in the same manner as in Example 3 except that montmorillonite ("KunipiaF" manufactured by KUNIMINE INDUSTRIES CO., LTD.) (Comparative Example 4) or organophilic montmorillonite ("I.30T" manufactured by Nanocor) (Comparative Example 5) was used instead of clinochlore. With respect to the obtained olefin polymer compositions, the flexural moduli were measured by the above method and were 2,220 MPa and 2,040 MPa, respectively.

**TABLE 1**

| | Phyllosilicate | Modified olefin polymer having a functional group | | Olefin polymer composition |
|---|---|---|---|---|
| | | Type of functional group | Amount of functional group (mmol/g) | Flexural modulus (MPa) |
| Ref. Ex. 1 | Nil | - | - | 1,910 |
| Ref. Ex. 2 | Clinochlore | - | - | 2,390 |
| Ex. 1 | Clinochlore | Ammonium group | 0.035 | 2,800 |
| Ex. 2 | Clinochlore | Maleic anhydride group | 0.144 | 2,680 |
| Ex. 3 | Clinochlore | Hydroxyl group | 0.112 | 2,680 |
| Comp. Ex. 1 | Montmorillonite | Ammonium group | 0.035 | 2,230 |
| Comp. Ex. 2 | Montmorillonite | Maleic anhydride group | 0.144 | 2,130 |
| Comp. Ex. 3 | Organophilic montmorillonite | Maleic anhydride group | 0.144 | 2,390 |
| Comp. Ex. 4 | Montmorillonite | Hydroxyl group | 0.112 | 2,220 |
| Comp. Ex. 5 | Organophilic montmorillonite | Hydroxyl group | 0.112 | 2,040 |

In the above Table 1, Reference Example 1 corresponds to an olefin polymer used in Example 1 and Reference Example 2 corresponds to a mixture of the olefin polymer used in Example 1 with a phyllosilicate in an amount of 5 wt% of the final composition. By comparison between Reference Examples 1 and 2, and Example 1, it is found that by mixing a phyllosilicate with an olefin polymer, the flexural modulus of the olefin polymer composition improves, and that by using a modified olefin polymer having a functional group, the flexural modulus remarkably improves.

As evident from comparison between Example 1 and Comparative Example 1, between Example 2 and Comparative Examples 2 and 3, and between Example 3 and Comparative Examples 4 and 5, the flexural modulus of an olefin polymer composition is high when clinochlore containing a cationic inorganic compound between layers is used as a phyllosilicate as compared with montmorillonite or organophilic montmorillonite containing no cationic inorganic compound between layers.

Further, it is shown that when the functional group of a modified olefin polymer having a functional group is an ammonium group, the flexural modulus of the olefin polymer composition is high as compared with a maleic anhydride group or a hydroxyl group.

### INDUSTRIAL APPLICABILITY

The modified olefin polymer composition and the olefin polymer composition of the present invention are, as a molding material which has sufficiently achieved the aimed object of improving physical properties by blending of a phyllosilicate, are subjected to conventional molding by e.g. compression molding, extrusion, injection molding or blow molding or further subjected to e.g. forming such as thermoforming, coating molding or expansion molding and suitably used as automobile components, home appliance components, packaging materials, building materials, civil engineering materials, fishery materials, other industrial materials, etc.

The entire disclosure of Japanese Patent Application No. 2005-091823 filed on March 28, 2005 including specification, claims and summary is incorporated herein by reference in its entirety.

## Claims

1. A modified olefin polymer composition obtained by mixing a phyllosilicate containing a cationic inorganic compound between layers with a modified olefin polymer having a functional group.

2. The modified olefin polymer composition according to Claim 1, wherein the cationic inorganic compound is a cationic metal hydroxide.

3. The modified olefin polymer composition according to Claim 1 or 2, wherein the modified olefin polymer having a functional group is one having a functional group at the molecular terminal.

4. The modified olefin polymer composition according to any one of Claims 1 to 3, wherein the functional group of the modified olefin polymer having a functional group is a cationic group.

5. The modified olefin polymer composition according to any one of Claims 1 to 4, wherein the ratios of the phyllosilicate and the modified olefin polymer based on the total amount of them are such that the phyllosilicate is from 5 to 95 wt% and the modified olefin polymer is from 95 to 5 wt%.

6. An olefin polymer composition comprising the modified olefin polymer composition as defined in any one of Claims 1 to 5 diluted with an olefin polymer.

7. The olefin polymer composition according to Claim 6, obtained by dilution with the olefin polymer in an amount of from 20 to 99 wt% based on the total amount of the composition.

8. The olefin polymer composition according to Claim 6, wherein the content of the phyllosilicate is from 0.5 to 50 wt% based on the total amount of the composition.
